# EUROPEAN PATENT APPLICATION

(11) **EP 4 428 741 A1**
(43) Date of publication of application: **11.09.2024**
(21) Application number: 23160753.2
(22) Date of filing: 08.03.2023
(51) Int. Cl.: G06F 30/28, B22F 10/31, B22F 10/38, G06F 113/10, G06F 119/08

(54) **PREDICTING A MATERIAL PROPERTY, GENERATING A COMPONENT, COMPONENT, SYSTEM**

(71) Applicant: Siemens Industry Software NV, 3001 Leuven (BE)
(72) Inventor: Lammens, Nicolas, 3020 Herent (BE)
(74) Representative: Siemens Patent Attorneys

(57) **Abstract**

A method for predicting a material property (MPP) of a component (CMP) made by additive manufacturing (ADM):
(a) defining an area of interest (AOI) and generating a mesh (MSH) at least in that area,
(b) providing a temperature model (TPM) during the additive manufacturing (ADM) process,
(c) providing a first additive manufacturing (ADM) process parameter set (PPS),
(d) calculation of a thermal history (THT) in said area of interest (AOI) based on the process parameter set (PPS) using said temperature model (TPM),
(e) determination of a solidification gradient (SGR) and a solidification front velocity (SFV) in the area of interest (AOI) from said thermal history.

To obtain reasonable material predictions the invention proposes the additional steps of:
(f) reducing the data set of solidification gradients (SGR) and solidification front velocities (SFV),
(g) determination of microstructure characteristics for the reduced data set (RDS) by microstructural modelling (PFM),
(h) determining said material property (MPP) for the reduced data set (RDS) using a material property model (MPM),
(i) interpolating of material property (MPP) from the solidification gradient (SGR) and solidification front velocity (SFV) for the nodes (NDE) within the area of interest (AOI),

Furthermore, generating a component CMP, a component CMP and a system (SYS) are provided.

## Description

### FIELD OF THE INVENTION

The invention relates to a method for predicting a material property of a component made by additive manufacturing, the method comprising:
(a) defining an area of interest of said component and generating a mesh at least in that area,
(b) providing a temperature model for modelling temperature of the area of interest during the additive manufacturing process,
(c) providing a first additive manufacturing process parameter set,
(d) calculation of a thermal history of nodes of said mesh in said area of interest based on the process parameter set using said temperature model,
(e) determination of a solidification gradient and a solidification front velocity for said nodes of the area of interest from said thermal history.

Further, the invention deals with generating a component by additive manufacturing. The invention also relates to a system for carrying out such method, a system for additively manufacturing such component and a component made according to the invention.

The invention deals with predicting the microstructure driven material properties. The preferred application of the invention relates to metal components manufactured using additive manufacturing.

### BACKGROUND OF THE INVENTION

The challenge in predicting material performance in additive manufacturing e.g., in laser powder-bed fusion additive manufacturing [LPBF - AM] arises from the specific process wherein powder metal is molten and solidified using a laser beam. The consequence is that heating/cooldown happens at a very local scale (order of microns) and short timespans (order of 10⁶K/s cooldown), while an entire component has dimensions on the order of centimeters with a print process taking multiple hours.

This large difference in scales (microns vs centimeters, microseconds vs hours) complicates part-scale material prediction in additive manufacturing.

Furthermore, geometrical effects e.g., thin walls or overhangs and the multitude of process parameters like laser power, laser scan speed, laser scan pattern/path result in local variations of the thermal history throughout a component during the generation. The thermal history results in variable microstructural features throughout an additive manufactured component, requiring a part-scale analysis to properly predict final performance. The microstructural features are mainly solidification artefacts as grain size, grain orientation, grain shape. These features strongly impact the mechanical performance of the material and are normally anisotropic.

To fully account for the local variations in microstructure (and the resulting material properties), state-of-the-art methods requires a chain of time-consuming simulations at the scale of the individual grains in the microstructure, and time-steps on the order of microseconds (or smaller). When executed on even the smallest of models, this chain of simulations requires high-performance computing infrastructure and weeks or even months of computation time to obtain results, making their application to a full industrially relevant part unfeasible for the foreseeable future.

An example of typical dimensions in such calculation may be given as a general indication of what can be expected:
A component may be 6cm in height. The laser has a spot-size of just 100um, a single layer of powder material is 60pm thick. A total of 2 million scan vectors is needed to print this part. The full thermal history of each of these scan vectors needs to be considered. The total print time for a single print of this part is about 10 hours. Average cooldown speeds in the part are about 10⁴-10⁵K/s. To be accurate within 100K (which is still insufficient for this type of analysis) would require 4-40 million timesteps in the thermal analysis.

These numbers only refer to the challenge of predicting the thermal field. The complexities of computing microstructure and material properties can be considered as even more complex and demanding.

One known approach to capture the microstructure resulting from the additive manufacturing process is the ExaAM project at Oak Ridge (https://www.ornl.gov/project/exaam-transforming-additive-manufacturing-through-exascale-simulation). This approach uses state-of-the-art coding practice (multi-threading, parallelization, GPU acceleration) to accelerate the large-scale computations and then use exascale computing infrastructure (exascale computing refers to supercomputing systems that can calculate at least 10¹⁸ (one quintillion) operations per second). Such an approach may be understood as "brute force" to perform the required simulations on the part level.

### SUMMARY OF THE INVENTION

Based on the prior art described above and the problems associated, the invention is based on the task of improving the ... process to improve the design and prediction of component performance in particular regarding the material performance of a component in the field of additive manufacturing.

It is another objective of the invention to reduce the computational effort of determining and predicting the material and component performance of an additive manufactured part.

Metal component performance is driven by a combination of the geometry, loading conditions and the material performance. The focus of this invention is on the material performance which is strongly influenced by the material microstructure.

The object of the invention is achieved by the independent claims. The dependent claims describe advantageous developments and modifications of the invention.

In accordance with the invention there is provided a solution for the above-described problems by the incipiently defined method with the additional steps:
(f) reducing the data set of solidification gradients and solidification front velocities such that every data point of the data set can be approximated by interpolation,
(g) determination of microstructure characteristics for the reduced data set based on the thermal history of the respective node by microstructural modelling,
(h) interpolating of solidification gradient and solidification front velocity for the nodes within the area of interest,
(i) determining said material property for the nodes within the reduced dataset from the microstructure characteristics using a material property model,
(j) interpolating of material property from the solidification gradient and solidification front velocity for the nodes within the area of interest,

Generally, the invention proposes to obtain reasonable material predictions by a simplified method for fast prediction of microstructurally driven material performance at the part scale for AM components.

Improving material properties may be termed as improving the material or component performance, in particular metal component performance. Performance herein may be understood to be one of

The preferred field of application of the invention is laser powder-bed fusion additive manufacturing.

Defining an area of interest of said component may extend to the entire component. Generating a mesh will then - as well as the following steps referring to the area of interest - be performed for the entire component, too.

The general term of material performance herein is to be understood to be the performance regarding at least one of the properties stiffness, strength, durability, fatigue, yield.

Influences of component geometry and loading conditions can be obtained using the conventional Computer Aided Design [CAD] and Finite Element [FE] approaches also used for other manufacturing methods. The invention instead focusses on material performance.

Neglecting the immense time required when combining a microstructural simulation and a material property model with a thermal simulation for the full component enables to obtain similar results as the invention since such process uses some of the same technical building blocks like microstructural modelling or phase field modelling and thermal modelling. But such simulation would require - even when applying the most powerful computer systems available at least several months of calculation for one single component. The invention proposes a method to reduce the number of computations needed - a specific manner of calculating only a limited subset within the component and interpolating those results to the full component. This is done by basically using the solidification gradient and solidification front velocity as a working coordinate. The immediate benefits are a time and cost-wise reduction of resources. Further, it should be noted that micro-level simulations for a full part quickly adds up to GB's and even TB's of storage requirement for simple parts. The invention therefore enables significantly saving storage space, too.

The invention target-oriented applies computational resources to a physical problem underlying the technical task of effectively additively manufacture with the desired mechanical performance. Conventional methods do not realistically enable a sufficiently accurate prediction of mechanical strength parameters of a component resulting in an enormous amount of generated waste parts when it comes to components which must have certain mechanical properties, like a certain deformation under specific load or must be able to withstand a certain mechanical load. Conventionally there may be a mismatch in simulation and reality, e.g., the component deforms more than expected, starts to crack early, fails prematurely. The invention avoids such mismatches more efficiently.

Most often however, material performance prediction has not been attempted at the part level and is usually restricted to (very) small sub-models of the complete component. In these methods, selecting the location for a sub-model is left as a user decision (potentially missing critical sections) and no solution is provided to merge the sub-model scaled results into a part-level analysis. The invention basically uses an automatic identification of which locations to analyze and how to interpolate those results to the full component by the step of reducing the data set of solidification gradients and solidification front velocities such that every data point of the data set can be approximated by interpolation.

The process according to the invention and as defined by claim 1 may be understood comprising the following steps:
1. Fast prediction of part-scale thermal history
2.Extraction of solidification gradient and solidification front velocity in each point of the model
3. Data reduction to minimal set of solidification gradient and solidification front velocity encompassing the entire part
4.Microstructural prediction and material property prediction on reduced solidification gradient and solidification front velocity field
5.Interpolation of material property to all points within the model using the solidification gradient and solidification front velocity field as a working coordinate.

Herein steps 3, 4 and 5 are most essential for saving significantly computational power.

Step 5 corresponding to step (h) of claim 1 referring to interpolating of material property for the nodes within the area of interest may schematically and simplified be understood as applying the rule of three to known triples of solidification gradient and solidification front velocity and material property using the space of solidification gradient and solidification front velocity as a working coordinate for determining the material property. Most preferably the space of solidification gradient and solidification front velocity is a 2-dimensional field.

Furthermore, generating a component , a component and a system are provided.

One preferred embodiment applies step (f) such that when selecting the reduced the data set of solidification gradients and solidification front velocities from the data set such that the reduced data set encompasses the data set of the entire area of interest in a 2-dimensional field space of solidification gradients and solidification front velocities such that the data set can be approximated by interpolation from the reduced data set. This embodiment guarantees that every single set of solidification gradient and solidification front velocity for the entire area of interest of the component can be addressed by interpolation of the reduced data set.

Another preferred embodiment provides the reduced data set encompassing the data set of the entire area of interest in a 2-dimensional field of solidification gradients and solidification front velocities such that when connecting each point of the reduced data set to its two neighbors of the reduced data set the data set is encircled by the resulting connection line track. In a more than 2-dimensional space for the working coordinate of the interpolation the data set is to be enveloped by the reduced data set. This process or test enables to efficiently guarantee that the entire field of solidification gradients and solidification front velocities is encompassed by the reduced data set. This kind of line-connection test shows how many points the reduced data set needs to enable interpolation throughout the complete area of interest.

Another preferred embodiment provides using microstructural modelling in step (g) is done using thermal-history-microstructure-modelling. Thermal-history-microstructure-modelling refers to any kind of modelling for determining the microstructure from the thermal history of the solidifying material. This can be done by one of several known tools. Known examples are the commercially available tools "cellular automata" or "phase field modelling" for the microstructural modelling in step (g). Cellular automata modelling leads to good results for this physical technical application of determining the microstructure characteristics.

Another preferred embodiment provides using microstructure-material-property-modelling for the material modelling in step (h). Microstructure-material-property-modelling refers to any kind of modelling for determining material properties from the microstructure of the solidified material. Currently the prevailing technology here is crystal plasticity. These material property prognoses are sufficiently accurate. Further, empirical rules may be applied for material modelling but those are not very general in applicability.

Still another preferred embodiment provides defining a target material property criterium and repeating steps (c) - (i) with a respectively changed additive manufacturing process parameter set until said target material property is fulfilled by said determined material property of step (i).

The first additive manufacturing process parameter set provided in step (c) may be - in a simplest embodiment - a standard set without any variation of the process parameters between the process steps regardless of the component geometry. This parameter set will most likely not lead to optimal results. Alternatively, a set may be applied which is known from processing a similar part.

Alternatively, an artificial intelligence module [AI-module] may be used to provide the first set. Said AI-module may be trained by known successful component generations. Such an AI-module may receive the component geometry as an input and outputs said additive manufacturing process parameter set.

The optimization or improvement of the additive manufacturing process parameter set may be done by iteration. A process parameter optimizer may be used applying a standard optimization strategy like:
- stepwise variation of single parameters when processing these variations by applying the prediction method according to the invention,
- evaluation of the variation effect and selecting a few variations with the most beneficial effects,
- following the most promising variations during variation of other parameters of the additive manufacturing process parameter set,
- follow this process until all parameters have been varied and finally choose the best additive manufacturing process parameter set.

Other improvement strategies may be used leading to better improvements or a different local or global optimum.

The method for predicting a material property as defined herein may be an integral process of a method for generating a component. This method may combine the method for predicting or improving a component's material property and further additively manufacturing said component applying the process parameter set obtained from the prediction/improvement process resulting in the desired material properties preferably as determined by the iteration.

Further the invention refers to a system including at least one computer for carrying out a method for predicting or improving a component's material property or for generating a component. Computer-implemented steps herein are in particular at least one - preferably all of the following steps:
(d) calculation of a thermal history of nodes of said mesh in said area of interest based on the process parameter set using said temperature model,
(e) determination of a solidification gradient and a solidification front velocity for said nodes of the area of interest from said thermal history,
(f) reducing the data set of solidification gradients and solidification front velocities such that every data point of the data set can be approximated by interpolation,
(g) determination of microstructure characteristics for the reduced data set based on the thermal history of the respective node by microstructural modelling,
(h) determining said material property for the nodes within the reduced dataset from the microstructure characteristics using a material property model,
(i) interpolating of material property from the solidification gradient and solidification front velocity for the nodes within the area of interest.

The other step disclosed herein are preferably at least partly computer implemented or completely. For example, the person with ordinary skill in the art knows that the mesh generation in step (a) is done as a computer implemented process. The selection of an area of interest may be done automatically or manually.

The area of interest may be automatically determined on the basis of a known (determined before) mechanical analysis under operational load of the component. This automatism may select or at least recommend to a user an area of relatively high or highest mechanical load (mechanical stress) as an area of interest.

A system including at least one computer for generating a component may include a 3D-printing apparatus.

The invention further relates to a material property improved or optimized component obtainable by a method for improving material properties of an additively manufactured component as explained herein.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

It is part of the invention that not all steps of the method necessarily have to be performed on the same component or computer instance but can also be performed on different computer instances.

In addition, it is possible that individual steps of the method described above can be carried out in one unit and the remaining components in another unit, as a distributed system.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale. It shall be understood that a preferred embodiment of the present invention can also be any combination of the dependent claims or above embodiments with the respective independent claim.

### BRIEF DESCRIPTION OF THE DRAWING

Embodiments of the invention are now described, by way of example only, with reference to the accompanying drawings, of which:

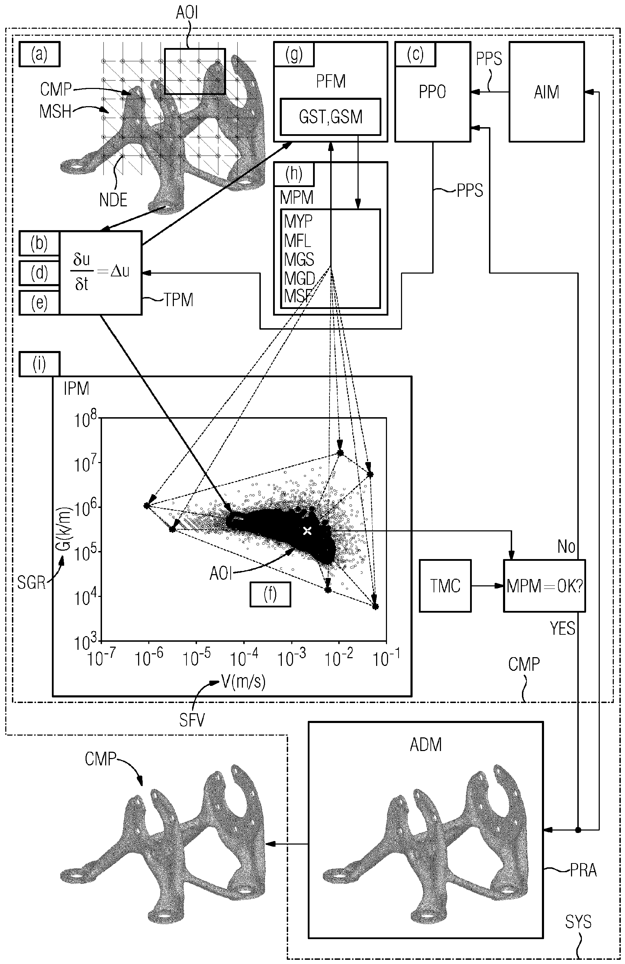

- Figure 1: shows a flow diagram of a method according to the invention.

### DESCRIPTION OF THE DRAWING

Figure 1 shows a simplified flow diagram illustrating a method for predicting a material property ADM of a component CMP made by additive manufacturing ADM.

As a first step (a) an area of interest AOI of said component CMP is defined and a mesh MSH with several nodes NDE at least in that area of interest AOI is generated. This selecting step is only optional. The analysis can be done on the full component. The selecting step would then result in the entire component being selected as area of interest AOI. The mesh MSH generation is done as a computer implemented process.

In step (b) a temperature model TPM for modelling temperature in the area of interest AOI during the additive manufacturing ADM process is provided. This thermal modeling is intentionally kept simple. While figure 1 illustrates the thermal model TPM as the general equation of heat conduction the preferred thermal modeling supplies several simplifying assumptions. All material properties are assumed to be constant for the purpose of thermal modeling. The thermal conductivity is assumed to be constant, and no thermal expansion procures. The phase shift is neglected and doesn't happen in the thermal model. This enables the thermal model TPM to result in a fully analytical solution without the necessity of iterations. For, the more accurate and more complex thermal modeling is possible within the scope of this invention. It was found that the degree of simplification as explained herein leads to sufficient accuracy and enables fast results with moderate computing power. Next to the component geometry the thermal modeling receives as an input additive manufacturing process parameters PPS. This may comprise the laser power, the laser velocity, the laser pass, parameters of the powder used for the additive manufacturing, the powder material layer thickness of each step when building up the component in the enclosure of the additive manufacturing machine and possibly further details of the additive manufacturing process.

These details are generated and provided in step (c) when providing an additive manufacturing ADM process parameter set PPS. A process parameter optimizer PPO generates and provides these process parameter sets PPS. This process parameter sets PPS may be predefined standard sets which are known to generate good results or may be only a first guess for the first step of iteration. The process parameter optimizer PPO includes the standard optimization technique for automatically providing one or several process parameter sets PPS. When providing these process parameter sets PPS the process parameter optimizer PPO may be supported by an artificial intelligence module AIM.

The temperature model TPM calculates in step (d) a thermal history THT of nodes of said mesh MSH in said area of interest AOI based on the process parameter set PPS using said temperature model TPM. This calculation is done for every node of said mesh MSH.

From said thermal history a solidification gradient SGR and a solidification front velocity SFV for said nodes NDE of the area of interest AOI is determined during step (e).

As illustrated in figure 1, step (f), the data set of solidification gradients SGR and solidification front velocities SFV is reduced by selecting a reduced data set RDS from the full data set such that every data point of the data set can be approximated by interpolation. The interpolation is done by an interpolation module IPM. The chart depicted in the interpolation module IPM of Figure 1 shows a <SGR, SFV> map for the component CMP. Each dot in the map represents a node NDE in the model and its corresponding <SGR, SFV> value as calculated in steps (d) and (e). The coordinates of the node are retrievably stored together with the point of solidification gradients SGR and solidification front velocities SFV.

The dashed line illustrates the concept of step (f): a minimum set of <SGR, SFV> combinations is selected that fully encompass the <SGR, SFV> map of the entire component CMP. This effectively reduces the map from 1000's of points and conditions to just a few 10's (here 6) of conditions. Since these few points encompass the entire map of <SGR, SFV> combinations, each point can be reached by interpolation. This may be done or tested by connecting each point of the reduced data set RDS to its two neighbors of the reduced data set RDS. The resulting connection line track encircles the entire data set.

Once, the boundary of the field of solidification gradients SGR and solidification front velocities SFV has been identified from step (f), namely the reduced data set RDS, microstructure characteristics for this reduced data set RDS based on the thermal history THT of the respective node NDE by microstructural modelling PFM, are determined in step (g). On the basis of the microstructure characteristics at least one material property MPP for the nodes NDE within the reduced data set RDS is determined using a material property model MPM.

The predictions themselves can be made using a thermal-history-microstructure-modelling-tool and a microstructure-material-property-modelling-tool. The microstructure may be modelled via a cellular automata or cellular automaton (see: e.g., https://en.wikipedia.org/wiki/Cellular_automaton). The material-property may be determined via crystal plasticity (see e.g.: https://en.wikipedia.org/wiki/Crystal_plasticity). Such tools are commercially available.

During step (g) microstructure characteristics e.g., grain structure GST and grain structure matrix GSM, from the solidification gradient SGR and solidification front velocity SFV for the nodes NDE within the area of interest AOI are determined. These microstructure characteristics are used for determining material properties MPP for the nodes NDE within the area of interest AOI using a material property model MPM during step (h).

During step (i) at least one material property MPP is interpolated from the solidification gradient SGR and solidification front velocity SFV for the nodes NDE within the area of interest AOI.

This prediction process of the material property MPP is part of an improvement and/or optimization process for the mechanical features of the component CMP. The interpolation module IPM enables to determine the material properties MPM in the area of interest AOI.

Melted metal powder for a metal component CMP - which is the preferred application of the invention - forms grains of specific size, shape and orientation during the solidification in the additive manufacturing process. These are the microstructure characteristics for a metal component CMP. From these characteristics material properties are directly determined using the material property model MPM.

These material properties MPP comprise material yield point MYP, material fatigue life MFL, material grain size MGS, material grain orientation MGD, material stiffness MSF.

A method for improving and optimizing the material properties MPP of the component CMP comprises
- defining a target material property criterium TMC and
- repeating steps (c) - (i) with a respectively changed additive manufacturing ADM process parameter set PPS until said target material property TMP is fulfilled by said determined material property MPP of step (i).

Said AI-module AIM may be trained by a feedback of the successful process parameter set PPS leading to acceptable material properties MPP. The AI-module receives the component geometry as an input and outputs said additive manufacturing process parameter set PPS.

Figure 1 also shows a system SYS including a computer CMP or a computer network for carrying the described method. The respective method steps are computer-implemented method steps or partly computer-implemented method steps. This system SYS includes further a 3D-printing apparatus PRA for generating said material property optimized component CMP.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. A method for predicting a material property (MPP) of a component (CMP) made by additive manufacturing (ADM), the method comprising:
(a) defining an area of interest (AOI) of said component (CMP) and generating a mesh (MSH) at least in that area of interest (AOI),
(b) providing a temperature model (TPM) for modelling temperature of the area of interest (AOI) during the additive manufacturing (ADM) process,
(c) providing an additive manufacturing (ADM) process parameter set (PPS),
(d) calculation of a thermal history (THT) of nodes of said mesh (MSH) in said area of interest (AOI) based on the process parameter set (PPS) using said temperature model (TPM),
(e) determination of a solidification gradient (SGR) and a solidification front velocity (SFV) for said nodes (NDE) of the area of interest (AOI) from said thermal history,
characterized (THT) by the additional steps:
(f) selecting the reduced data set (RDS) from the data set of solidification gradients (SGR) and solidification front velocities (SFV) such that every data point of the data set can be approximated by interpolation from the reduced data set (RDS),
(g) determining of microstructure characteristics for the reduced data set (RDS) based on the thermal history (THT) of the respective node (NDE) by microstructural modelling (PFM),
(h) determining said material property (MPP) for the nodes (NDE) within the reduced data set (RDS) from the microstructure characteristics using a material property model (MPM),
(i) interpolating of said material property (MPP) from the solidification gradient (SGR) and solidification front velocity (SFV) for the nodes (NDE) within the area of interest (AOI).

2. Method according to claim 1, wherein
step (f) comprises selecting the reduced data set (RDS) of solidification gradients (SGR) and solidification front velocities (SFV) from the data set such that the reduced data set (RDS) encompasses the data set of the entire area of interest (AOI) in a space of solidification gradients (SGR) and solidification front velocities (SFV) such that the data set can be approximated by interpolation from the reduced data set (RDS).

3. Method according to claim 2, wherein
the reduced data set (RDS) encompasses the data set of the entire area of interest (AOI) in a 2-dimensional field of solidification gradients (SGR) and solidification front velocities (SFV) such that when connecting each point of the reduced data set (RDS) to its two neighbors of the reduced data set (RDS) the data set is encircled by the resulting connection line track.

4. Method according to one of the preceding claims, wherein the microstructural modelling (PFM) in step (g) is done using thermal-history-microstructure-modelling.

5. Method according to one of the preceding claims, wherein the material modelling in step (h) is done using microstructure-material-property-modelling.

6. Method according to one of the preceding claims, comprising the additional steps of:
- defining a target material property criterium (TMC),
- repeating steps (c) - (i) with a changed additive manufacturing (ADM) process parameter set (PPS) for each iteration until said target material property (TMP) is fulfilled by said determined material property (MPP) of step (i).

7. A method for generating a component (CMP) the method comprising the steps as specified in at least one of the previous claims for improving a component's (CMP) material property (MPP) further comprising additively manufacturing said component (CMP) applying the process parameter set (PPS) resulting in the material properties (ADM) as determined by the iteration according to claim 6.

8. A system (SYS) including at least one computer for carrying out a method according to at least one of the preceding claims 1 - 7.

9. A system (SYS) including at least one computer (COM) for carrying out a method according to preceding claim 8 including a 3D-printing apparatus (PRA).

10. Material property optimized component (CMP) obtainable by a method according to at least one of the preceding claims 1 - 7.
